# FASCICULE DE BREVET EUROPEEN

(11) **EP 1 470 079 B1**
(45) Date de publication et mention de la délivrance du brevet: **03.01.2007**
(21) Numéro de dépôt: 02801115.3
(22) Date de dépôt: 11.12.2002
(51) Int. Cl.: C02F 1/24

(54) **INSTALLATION DE TRAITEMENT D EAUX PAR FLOTTATION**
EINRICHTUNG ZUR BEHANDLUNG VON WASSER DURCH FLOTATION
INSTALLATION FOR TREATING WATER BY MEANS OF FLOTATION

(30) Priorité: 30.01.2002 FR 0201114
(43) Date de publication de la demande: 27.10.2004
(73) Titulaire: DEGREMONT, 92500 Rueil-Malmaison (FR)
(72) Inventeur: VION, Patrick, F-78800 Houilles (FR)
(74) Mandataire: Peaucelle, Chantal
(86) Numéro de dépôt international: PCT/FR2002/004292
(87) Numéro de publication internationale: WO 2003/064326

(56) Documents cités:
- US-A- 5 766 484
- LUNDH M ET AL: "Experimental studies of the fluid dynamics in the separation zone in dissolved air flotation" WATER RESEARCH, ELSEVIER SCIENCE PUBLISHERS, AMSTERDAM, NL, vol. 34, no. 1, 1 janvier 2000 (2000-01-01), pages 21-30, XP004243782 ISSN: 0043-1354
- TA C T, BECKLEY J, EADES, A: "A multiphase CFD model of DAF process" WATER SCIENCE AND TECHNOLOGY, vol. 43, no. 8, 2001, pages 153-157, XP008008203
- SCHOFIELD T: "Dissolved air flotation in drinking water production" WATER SCIENCE AND TECHNOLOGY, vol. 43, no. 8, 2001, pages 9-18, XP008008195
- BERNE F ET AL.: "Water Treatment Handbook" 1991 , SIXTH ENGLISH EDITION, VOL. 2, PAGES 679-686, LAVOISIER PUBLISHING, PARIS XP002240254 le document en entier

## Description

La présente invention concerne une installation de traitement d'eaux comportant une cellule de flottation dans laquelle est admise l'eau brute, préalablement floculée puis mélangée à de l'eau pressurisée et détendue de façon que les matières en suspension contenues dans l'eau brute soient entraînées par les microbulles résultant de ladite détente et évacuées à la surface du liquide contenu dans la cellule, l'eau traitée étant évacuée par le fond de ladite cellule.

On connaît (EP-A-0 659 690) une installation du type mentionné ci-dessus qui comporte une zone de floculation, une zone de mélange de l'eau brute floculée, dans un courant ascendant, avec de l'eau pressurisée délivrée par un système de pressurisation-détente, et une zone de flottation à la partie supérieure de laquelle sont évacuées les matières en suspension contenues dans l'eau brute et amenées à la surface par les microbulles, cette zone de flottation étant munie, à sa partie inférieure d'un dispositif de reprise perforé (plancher avec ou sans buselures, collecteurs, etc...) de manière que toute la surface de la zone de flottation présente un flux d'écoulement uniforme et identique du liquide clarifié.

Une caractéristique de ce type de flottateurs réside dans la formation d'un lit épais de microbulles grâce auquel la floculation s'effectue en deux stades, tout d'abord dans la zone de floculation puis au sein du lit de microbulles grâce à la masse de contact importante due aux microbulles assurant par ailleurs la séparation par flottation des matières en suspension.

L'une des limitations à l'utilisation de telles installations réside dans leur dimensionnement. Selon « H.J. KIURI, dans un article intitulé « Development of dissolved air flottation technology from the first generation to the newest (third) one (DAF in turbulent flow conditions » publié dans « Water Science and Technology", Vol. 43, N° 8, pp 1-7, IWA Publishing 2001, une règle de base du dimensionnement des cellules de flottation est que le rapport de la profondeur (ou hauteur H) de la zone de flottation, située au-dessus du système de reprise, divisée par la longueur horizontale L entre l'entrée d'eau et la paroi opposée (rapport H/L) soit supérieur à 1. Le respect de cette règle amène à construire des installations de grande hauteur très coûteuses.

Une autre difficulté qui est apparue lors de la mise en oeuvre industrielle de ce type d'installation concerne la formation d'un lit de microbulles de grande hauteur dans la cellule de flottation (hauteur du lit de microbulles souvent supérieure à 3 mètres).

Cette hauteur, d'une part doit être supérieure à une valeur minimale pour assurer une bonne finition de la floculation, optimiser l'accrochage entre les microbulles et les flocs et également pour permettre les phénomènes de coalescence ou d'agglomération qui sont à l'origine du grossissement des microbulles et donc de l'accroissement de leur vitesse ascensionnelle (30 à 60 m/h) et, d'autre part elle doit être limitée afin de réduire la profondeur des ouvrages (c'est-à-dire leur hauteur), et donc leur coût, et des sursaturations élevées en gaz. C'est ainsi qu'une hauteur de 1,5 m peut se traduire par une sursaturation de + 15%, alors qu'une hauteur de 4 m peut entraîner une sursaturation de + 40%, ce qui constitue un inconvénient majeur lorsque la cellule de flottation est implantée en amont d'une zone de traitement par filtration, par exemple sur lit de sable ou sur membranes.

Des facteurs susceptibles d'augmenter la hauteur du lit de microbulles sont notamment les suivants:
- une alimentation hydraulique de mauvaise qualité (hétérogène) qui conduit, par exemple, à augmenter le taux de pressurisation afin d'augmenter la hauteur du lit de microbulles pour le rendre plus stable et,
- une longueur importante de la cellule de flottation qui conduit à de fortes hauteurs (H/L > 1 selon l'état antérieur de l'art).

La présente invention s'est fixé pour objectif de résoudre, d'une part, le problème de la grande profondeur nécessaire à l'obtention du lit de microbulles et, d'autre part, le problème de la stabilité dudit lit de microbulles, dans de telles installations de traitement.

En conséquence, cette invention concerne une installation de purification d'eaux comportant une zone de coagulation, une zone de floculation, une zone de mélange, dans un courant ascendant, de l'eau floculée avec de l'eau pressurisée délivrée par un système de pressurisation-détente, générateur de microbulles, et une zone de flottation à la partie supérieure de laquelle sont évacuées les matières en suspension amenées à la surface par les microbulles, cette zone de flottation comportant à sa partie inférieure un moyen de reprise de l'eau clarifiée, cette installation étant caractérisée en ce que :
- la géométrie de la zone de flottation est telle que le rapport entre la hauteur de la zone située au-dessus du moyen de reprise de l'eau clarifiée, et la longueur de ladite zone, est compris entre 0,3 et 1 ; et
- le rapport entre la surface de la lame d'eau à la sortie de la zone de mélange et la surface de la zone de flottation proprement dite est compris entre 0,05 et 0,5, et de préférence entre 0,1 et 0,35.

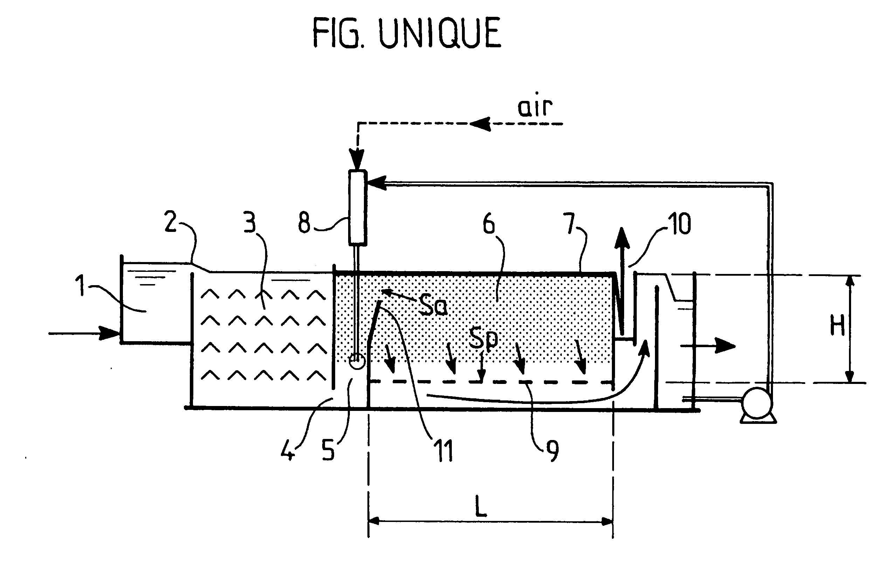

D'autres caractéristiques et avantages de la présente invention ressortiront de la description faite ci-après, en référence à la figure unique du dessin annexé qui en illustre, de façon schématique un mode de réalisation donné à titre non limitatif.

Comme on le voit sur la figure, l'installation comporte : une zone de coagulation 1 dans laquelle l'eau brute est mélangée à un coagulant, ce coagulant pouvant, dans certains cas, être injecté en amont de cette zone 1; une zone de floculation 3, séparée de la zone de coagulation 1 par un système de déversoir 2, une zone de mélange 5 dans laquelle l'eau brute floculée, amenée au travers d'une ouverture d'alimentation 4 est mélangée, dans un courant ascendant avec des microbulles produites par un système de pressurisation-détente 8 et une zone de flottation 6. La zone de flottation 6 est séparée de la zone de mélange 5 par un déversoir incliné 11. Dans ladite zone de flottation 6, il se produit une accumulation de microbulles formant un lit épais dans un courant descendant, les matières en suspension dans l'eau brute, entraînées par les microbulles s'accumulant en surface 7 pour être évacuées en 10, l'eau clarifiée étant soutirée à la partie inférieure de cette zone de flottation, après reprise au travers d'un plancher 9, ou moyen similaire permettant de fonctionner à de grandes vitesses de flottation.

A l'entrée de la zone de floculation 3, l'eau brute est répartie, de manière homogène, sur toute la largeur de cette zone, par le système de déversoir 2 réalisé par exemple, sous la forme de déversoirs continus, crénelés, à tubes perforés, ramifiés ou non. Ce système de déversoir et de répartition homogène 2 permet d'assurer éventuellement, l'apport et le mélange à l'eau brute coagulée de produit(s) tel(s) qu'un adjuvant de floculation, la floculation proprement dite étant assurée par un système statique ou par des barrières rotatives horizontales. La combinaison du système de répartition 2 et des floculateurs statiques ou à axe horizontal assure une alimentation homogène de la zone de flottation sur toute sa largeur. La floculation peut également être assurée par un système d'agitateur(s) mécanique(s) à axe vertical combiné avec des orifices calibrés situés à l'entrée 4 de la zone de mélange 5. Ce dernier dispositif permet de rééquilibrer les flux et de compenser les perturbations hydrauliques et les mouvements de rotation induits par l'agitation à axe vertical.

Dans la zone de mélange 5, l'eau brute floculée est mélangée aux microbulles, générées au sein de l'eau pressurisée produite par le réservoir de pressurisation 8 dans un courant ascendant partant du bas de la zone, la détente et la formation des microbulles étant réalisées par une pluralité de systèmes d'injection de l'eau pressurisée, répartis sur toute la largeur de la zone, ce courant ascendant étant suivi d'un courant descendant jusqu'au système de reprise. Le flux descendant présente une vitesse inférieure à celle du flux ascendant, les matières en suspension entraînées par les microbulles étant, en grande partie, libérées lors du changement de direction du flux en venant s'accumuler en 7 à la surface de la zone de flottation.

Selon la présente invention, la hauteur du lit de microbulles est maintenue à au moins 1 mètre à 1,5 m, de façon à obtenir les effets bénéfiques du lit de microbulles qui joue le rôle de filtre et de coalesceur de ces dernières (le lit joue le rôle d'un accélérateur de la vitesse ascensionnelle des microbulles coalescées). La hauteur de la zone de flottation 6 doit donc être supérieure à 1,5 ou 2 mètres et, selon l'invention, le rapport entre la hauteur (H) de la zone située au-dessus du système de reprise 10, et la longueur (L) de cette zone est compris entre 0,3 et 1 (0,3<H/L<1). Cette caractéristique qui va à l'encontre des recommandations de l'Homme de l'Art (Article de K.J. KIURU page 1, cité ci-dessus) permet de restreindre la profondeur des installations, la surface de cette dernière restant constante et correspondant en général à une vitesse de traitement (exprimée par rapport à la surface Sp, c'est-à-dire la surface de la zone de flottation 6 correspondant à la longueur L de cette zone désignée sur la figure) comprise entre 15 et 60 m³/m².h, ce qui a une répercussion notable sur les coûts de construction des installations. Cette réduction de la profondeur des installations permet également d'éviter les sursaturations en air dissous et leurs répercussions en aval de la chaîne de traitement, en particulier sur les filtres à sable et/ou membranes.

Selon une autre caractéristique de cette installation selon l'invention, le rapport entre la surface Sa de la lame d'eau qui est située à la verticale de la sortie de la zone de mélange 5 (c'est-à-dire la surface de la section verticale comprise entre le bord supérieur du déversoir incliné 11 et le plan d'eau de la zone de flottation 6), et de la surface Sp de la zone de flottation 6 (surface de cette zone correspondant à la longueur L) doit être compris entre 0,05 et 0,5 (0,05<Sa/Sp<0,5), et de préférence entre 0,1 et 0,35 (0,1<Sa/Sp<0,35). Cette caractéristique permet de définir une gamme de vitesses de la lame d'eau à la verticale de la sortie de la zone de mélange 5 telle qu'on ne dépasse pas :
- une limite supérieure de vitesse au-delà de laquelle, d'une part on crée un mouvement de rotation généralisé qui désagrège le lit de bulles dans la zone de flottation 6 et l'entraîne dans l'effluent traité et, d'autre part on éroderait gravement le lit de boues 7 situé à la surface du flottateur. On notera qu'une augmentation du taux de pressurisation, donc de la quantité de microbulles produites, pourrait stabiliser le lit de bulles avec, pour conséquence une augmentation de hauteur relativement importante, donc, à la limite, incompatible avec la géométrie d'installation définie par l'invention ;
- une limite inférieure de vitesse au-dessous de laquelle le régime turbulent dans la zone de flottation 6 n'est pas suffisant pour assurer la formation et la stabilité du lit de microbulles, ce qui entraîne une dégradation rapide de la qualité de l'eau traitée.

Le système de reprise 9 de l'eau clarifiée est constitué d'un plancher muni de perforations ou de tuyaux pourvus de trous, comme décrit dans EP-A-0 659 690, en créant une résistance à l'écoulement au travers de ce plancher qui est maximale sur l'extrémité finale de la zone de flottation (côté évacuation) et va en diminuant en direction de l'extrémité initiale de cette zone (côté alimentation). Cette caractéristique permet d'instaurer un régime turbulent au sein de la zone de flottation, ce qui favorise l'obtention d'une lit de microbulles stable et suffisamment épais, permettant une grande vitesse de traitement.

Ces caractéristiques de dimensionnement permettent, de façon surprenante pour l'Homme de l'art, d'atteindre des vitesses de traitement pouvant aller de 15 à 60 m/h, ceci avec des appareils « plats » (rapport H/L compris entre 0,3 et 1).

Un certain nombre d'avantages découlent de l'invention parmi lesquels on peut mentionner :
- possibilité de créer des installations de grande capacité de traitement, de hauteur limitée. C'est ainsi que, par exemple, l'invention permet de réaliser une installation ayant une longueur de 7 m pour une hauteur de 3 m (au lieu d'une hauteur de 7 m ou davantage comme le préconise l'état de l'art antérieur);
- la limitation en hauteur des dimensions de l'installation se traduit, d'une part par une réduction des coûts de construction, et d'autre part par une limitation des sursaturations en gaz dissous néfastes aux systèmes de filtration situés en aval de la zone de flottation.

Dans l'exemple mentionné ci-dessus, l'adoption d'une hauteur limitée à 3 mètres réduit considérablement la sursaturation de l'eau clarifiée, puisqu'elle peut n'être que de 30% supérieure à la dose de saturation, alors qu'elle pourrait atteindre 70% avec une hauteur de 7 m, selon l'état antérieur de l'art.

On a donné ci-après deux exemples de mise en oeuvre destinés à faire ressortir l'intérêt du choix selon l'invention d'un rapport Sa (surface de la lame d'eau située à la verticale de la sortie de la zone de mélange 5) divisée par la surface Sp de la zone de flottation 6 (c'est-à-dire la surface du système de reprise 9) compris entre 0,05 et 0,5.

Ces exemples ont été réalisés sur une unité pilote comprenant un coagulateur, un floculateur de type statique et une cellule de flottation d'une longueur de plancher (L) de 2,50 m et d'une hauteur (H) au-dessus du plancher (système de reprise 9) de 3,6 m. La hauteur de la lame d'eau au-dessus du haut de la zone de mélange (Ha) était variable entre 0,07 m et 1,50 m. La vitesse de traitement était de 35 m³/m².h. L'unité pilote comportait en outre un circuit de pressurisation à 5.10⁵Pa et de détente permettant d'injecter un débit d'eau pressurisée entre 10 et 20% du produit traité. Afin de simuler une distorsion hydraulique, l'entrée 4 de la zone de flottation pouvait être partiellement obstruée et, lors des essais on a neutralisé 50% du passage.

Ces essais ont été réalisés sur une eau de rivière peu chargée. Le débit d'alimentation a été réglé pour obtenir une vitesse sur le plancher 9 de 40 m/h.

Les objectifs de ces essais étaient d'étudier les conditions hydrauliques nécessaires à la formation et à la stabilité du lit de microbulles et les conditions de hauteur minimale de ce lit de microbulles pour en maintenir la stabilité.

Les deux principaux paramètres étudiés ont été la hauteur de la lame d'eau au-dessus du point haut de la zone de mélange et l'homogénéité ou non de la distribution à l'amont de cette zone. Le pourcentage ou taux d'eau pressurisée optimal est d'environ 10% et pour obtenir la stabilisation il a été porté à 15 et 20%.

Les critères de qualité sont la formation du lit de microbulles, sa hauteur et finalement la qualité de l'eau flottée qui est exprimée ici par la turbidité en NTU (unité néphélométrique de turbidité). Si la turbidité est inférieure à 2 NTU elle est considérée comme acceptable et si elle est inférieure à 1 NTU elle peut être qualifiée d'excellente.

Les résultats obtenus ont été précisés sous la forme des deux tableaux ci-après.

Le premier tableau illustre les résultats relatifs à l'exemple 1 et il montre l'influence de la vitesse de la lame d'eau en sortie de la zone de mélange 5 (cette sortie correspondant à une lame d'eau ayant une hauteur Ha et de surface Sa) sur la stabilité du lit de bulles et sur la turbidité de l'eau traitée.

Le second tableau illustre les résultats obtenus lors de la mise en oeuvre de l'exemple 2 et il fait ressortir l'influence de l'homogénéité de distribution à l'amont de la zone de mélange 5, pour un rapport Sa/Sp égal à 0,15.

### Première série d'essais

### Influence de la vitesse en sortie de zone de mélange

| Sa / Sp | Ha(m) | Y (Taux de pressurisation) | Lit de bulles | Turbidité eau traitée |
|---|---|---|---|---|
| 0,028 | 0,07 | 10% | Pas d'interface. Mise en rotation très importante. Départ des bulles. | 11 NTU |
| 0,028 | 0,07 | 20% | Idem | 7 NTU |
| 0,04 | 0,1 | 10% | Idem | 9 NTU |
| 0,04 | 0,1 | 15% | Rotation moins importante début formation d'un lit hauteur : environ 3, 3 m | 1,8 NTU |
| 0,08 | 0,2 | 10% | Interface peu nette. Rotation encore importante. Lit mal formé. Hauteur imprécise. | 4 NTU |
| 0,08 | 0,2 | 15% | Formation lit de bulles. Hauteur : environ 2,3 m. | 1,1 NTU |
| 0,15 | 0,38 | 10% | Interface nette. Lit homogène. Hauteur : 1,5 m | 0,7 NTU |
| 0,15 | 0,38 | 15% | Interface nette. Lit homogène. Hauteur : 2,1 m | 0,6 NTU |
| 0,30 | 0,75 | 10% | Idem Hauteur : 1,60 m | 0,8 NTU |
| 0,60 | 1,5 | 10% ou 15% ou 20% | Pas de lit de bulles. Départ des bulles | 9 NTU |

Les résultats de ces essais permettent d'avancer les conclusions suivantes :
- une vitesse trop forte dans la section de hauteur Ha, rapport Sa/Sp faible, a tendance à faire tourner fortement le lit de microbulles empêchant, par là, sa stabilisation donc sa formation. Cependant, il est possible en augmentant le taux de pressurisation de contrarier ce mouvement et d'obtenir un lit de bulles. Ainsi, avec un taux de 15%,il a été possible de stabiliser le lit de bulles (4^{éme} et 6^{ème} cas du tableau ci-dessus) mais avec une augmentation importante de ce lit de microbulles (respectivement 3,3 m et 2,3 m au lieu de 1,5 m) ;
- une vitesse trop faible, rapport Sa/Sp fort (10^{ème} cas du tableau), au contraire ne provoque pas la rotation minimale, le régime turbulent n'est pas atteint et le lit de bulles ne peut se former. Un excès d'air est ici inopérant ;
- les rapports Sa/Sp corrects se situent dans la plage 0,05 et 0,5 et permettent d'avoir un lit de bulles de hauteur limitée (rapport H/L<1). En dehors de cette plage, le lit de bulles n'est pas formé ou la hauteur du lit de bulles est importante. Dans le 4^{ème} cas du tableau: hauteur du lit 3,3 m (soit H/L = 1,32).

Dans la seconde série d'essais dont les résultats sont consignés dans le tableau ci-après, le rapport Sa/Sp de 0,15 a été maintenu. Deux essais ont été réalisés, l'un avec une alimentation homogène garantie par un déversoir à l'entrée du floculateur et une floculation statique, l'autre en neutralisant 50% de l'entrée 4 de la cellule de flottation (alimentation basse de la cellule de flottation).

### Deuxième série d'essais :

### Influence de l'homogénéité de distribution à l'amont de la zone de mélange.

| Sa / Sp | Ha | Alimentation | Y | Lit de bulles | Turbidité eau traitée |
|---|---|---|---|---|---|
| 0,15 | 0,38 | Homogène sur largeur du flottateur | 10 % | H = 1,5 m | 0,7 NTU |
| 0,15 | | Alimentation sur 50% largeur du flottateur | 10% | Interface pas nette. Entraînement bulles. | 2 NTU |
| 0,15 | | Idem | 15% | Lit de bulles H = 3,1 | 0,9 NTU |

Les résultats apportés par ces essais permettent d'avancer les conclusions suivantes :
- une alimentation non homogène sur la largeur de la cellule de flottation ne permet pas toujours de former un lit de bulles.
- dans le cas présent, il a fallu augmenter le taux de pressurisation. La hauteur du lit de bulles est alors importante, ici 3,1 m et le rapport H/L de la cellule de flottation serait supérieur à 1 et
- une alimentation homogène est nécessaire à l'obtention de lits de bulles de faible hauteur.

Il demeure bien entendu que la présente invention n'est pas limitée aux exemples de réalisation décrits et représentés ci-dessus, mais qu'elle en englobe toutes les variantes.

## Revendications

1. - Installation de purification d'eaux comportant une zone de coagulation (1), une zone de floculation (3), une zone de mélange (5), dans un courant ascendant, de l'eau floculée avec de l'eau pressurisée délivrée par un système de pressurisation-détente (8) générateur de microbulles et une zone de flottation (6) à la partie supérieure de laquelle sont évacuées les matières en suspension amenées à la surface par les microbulles, cette zone de flottation comportant à sa partie inférieure un moyen de reprise (9) de l'eau clarifiée, cette installation étant **caractérisée en ce que** :
- le moyen de reprise (9) de l'eau clarifiée à la base de la zone de flottation est constitué d'un plancher muni de perforations, ou de tuyaux pourvus de trous, créant une résistance à l'écoulement au travers de ce plancher qui est maximale sur l'extrémité finale de la zone de flottation (côté évacuation) et va en diminuant en direction de l'extrémité initiale de cette zone (côté alimentation);
- la géométrie de la zone de flottation (6) est telle que le rapport entre la hauteur (H) de la zone située au-dessus du moyen de reprise (9) de l'eau clarifiée, et la longueur (L) de ladite zone, est compris entre 0,3 et 1; et
- le rapport entre la surface (Sa) de la lame d'eau à la sortie de la zone de mélange (5) et la surface (Sp) de la zone de flottation proprement dite est compris entre 0,05 et 0,5 et, de préférence, entre 0,1 et 0,35.

2. - Installation selon la revendication 1, **caractérisée en ce qu'**elle comporte des moyens (2) conçus de façon à répartir de manière homogène l'eau brute coagulée dans la zone de coagulation (1), sur toute la largeur de la zone de floculation (3).

3. - Installation selon l'une des revendications 1 ou 2, **caractérisée en ce que** l'homogénéisation et la floculation sont assurées par un système de floculation statique.

4. - Installation selon l'une des revendications 1 ou 2, **caractérisée en ce que** l'homogénéisation et la floculation sont assurées par des barrières rotatives horizontales.

5. - Installation selon l'une des revendications 1 ou 2, **caractérisée en ce que** l'homogénéisation et la floculation sont assurées par un système d'agitateurs mécaniques à axe vertical, des orifices calibrés étant prévus à l'entrée (4) de la zone de mélange (5).

6. - Installation selon la revendication 2, **caractérisée en ce que** les moyens (2) assurant la répartition homogène de l'eau brute sur toute la largeur de la zone de floculation (3) sont réalisés notamment sous la forme de déversoirs continus, crénelés, à tubes perforés, éventuellement ramifiés.

## Claims

1. Water purification installation comprising a coagulation area (1), a flocculation area (3), a mixing area (5), in a rising flow of the flocculated water with the pressurized water being supplied by a microbubble generating pressurization-pressure reduction system (8) and a flotation area (6) in the upper part of which are discharged the suspended matter brought to the surface by the microbubbles, said flotation area having in its lower part a clarified water collecting means (9), said installation being **characterized in that**
- the clarified water collecting system (9) at the base of the flotation area (6) is constituted by a floor provided with perforations, or pipes having holes bringing about a resistance to flow within said floor and which is at a maximum on the final end of the flotation area (discharge side) and decreases in the direction of the initial end of said area (supply side),
- the geometry of the flotation area (6) is such that the ratio between the height (H) of the area above the clarified water collecting means (9) and the length (L) of said area is between 0.3 and 1 and
- the ratio between the surface (Sa) of the sheet of water at the outlet from the mixing area (5) and the surface (Sp) of said flotation area is between 0.05 and 0.5 and preferably between 0.1 and 0.35.

2. Installation according to claim 1, **characterized in that** it has means (2) designed in such a way to homogeneously distribute the untreated water coagulated in the coagulation area (1) over the entire width of the flocculation area (3).

3. Installation according to one of the claims 1 or 2, **characterized in that** homogenization and flocculation are ensured by a static flocculation system.

4. Installation according to one of the claims 1 or 2, **characterized in that** homogenization and flocculation are ensured by horizontal rotary barriers.

5. Installation according to one of the claims 1 or 2, **characterized in that** homogenization and flocculation are ensured by a vertically axed system of mechanical stirrers, metering holes being provided at the inlet (4) of the mixing area (5).

6. Installation according to claim 2, **characterized in that** the means (2) ensuring the homogeneous distribution of the untreated water over the entire width of the flocculation area (3) are in particular in the form of toothed, continuous outflows having perforated tubes and which are possibly branched.

## Patentansprüche

1. Anlage zum Reinigen von Wässern, mit einem Koagulationsbereich (1), einem Ausflockungsbereich (3), einem Bereich (5) zum Mischen von mit Flocken vermischtem Wasser in einem aufsteigenden Strom mit unter Druck gesetztem Wasser, das von einem Druckaufbau- und Entspannungssystem (8) als Erzeuger von Mikrobläschen geliefert wird, und mit einem Flotationsbereich (6), in dessen oberem Abschnitt die in Suspension befindlichen Stoffe abgeführt werden, die durch die Mikrobläschen an die Oberfläche mitgenommen werden, wobei dieser Flotationsbereich in seinem unteren Abschnitt ein Mittel (9) zum Abführen des geklärten Wassers umfasst, wobei diese Anlage **dadurch gekennzeichnet ist, dass**:
- das Mittel (9) zum Abführen des geklärten Wassers am Boden des Flotationsbereichs von einem mit Perforationen oder mit Löcher aufweisenden Rohren versehenen Zwischenboden gebildet ist, wodurch ein Widerstand gegen Strömung quer durch diesen Zwischenboden gebildet wird, der am hinteren Ende des Flotationsbereichs (Ablaufseite) am größten ist und sich abnehmend in Richtung auf das vordere Ende (Zulaufseite) dieses Bereiches erstreckt;
- die Geometrie des Flotationsbereichs (6) so gestaltet ist, dass das Verhältnis zwischen der Höhe (H) des oberhalb des Mittels (9) zum Abführen des geklärten Wassers gelegenen Bereichs und der Länge (L) des besagten Bereichs zwischen 0,3 und 1 liegt; und
- das Verhältnis zwischen der Oberfläche (Sa) der Wasserschicht am Ausgang des Mischbereichs (5) und der Oberfläche (Sp) des eigentlichen Flotationsbereichs zwischen 0,05 und 0,5 und vorzugsweise zwischen 0,1 und 0,35 liegt.

2. Anlage nach Anspruch 1, **dadurch gekennzeichnet, dass** sie Mittel (2) umfasst, die so gestaltet sind, dass das im Koagulationsbereich (1) koagulierte Rohwasser gleichmäßig über die gesamte Breite des Ausflockungsbereichs (3) verteilt wird.

3. Anlage nach einem der Ansprüche 1 oder 2, **dadurch gekennzeichnet, dass** die Homogenisierung und die Ausflockung durch ein statisches Ausflocksystem sichergestellt sind.

4. Anlage nach einem der Ansprüche 1 oder 2, **dadurch gekennzeichnet, dass** die Homogenisierung und die Ausflockung durch horizontale Drehbarrieren sichergestellt sind.

5. Anlage nach einem der Ansprüche 1 oder 2, **dadurch gekennzeichnet, dass** die Homogenisierung und die Ausflockung durch ein System von mechanischen Rührwerken mit vertikalen Achsen sichergestellt sind, wobei am Zulauf (4) des Mischbereichs (5) kalibrierte Öffnungen vorgesehen sind.

6. Anlage nach Anspruch 2, **dadurch gekennzeichnet, dass** die Mittel (2) zum homogenen Verteilen des Rohwassers auf der gesamten Breite des Ausflockungsbereichs (3) insbesondere in Gestalt von Überläufen in kontinuierlicher oder gerippter Bauweise, aus gelochten und ggf. verzweigten Rohren ausgeführt sind.
